# EUROPEAN PATENT APPLICATION

(11) **EP 2 456 201 A1**
(43) Date of publication of application: **23.05.2012**
(21) Application number: 10799760.3
(22) Date of filing: 07.07.2010
(51) Int. Cl.: H04N 7/173

(54) **TRANSMITTING APPARATUS, RECEIVING APPARATUS, TRANSMITTING METHOD, RECEIVING METHOD AND TRANSPORT SYSTEM**

(30) Priority: 16.07.2009 JP 2009167913
(71) Applicant: Gnzo Inc., Tokyo 162-0842 (JP)
(72) Inventor: KASAI, Hiroyuki, Choufu-shi Tokyo 182-8585 (JP); UCHIHARA, Naofumi, Choufu-shi Tokyo 182-8585 (JP)
(74) Representative: Piotrowicz, Pawel Jan Andrzej
(86) International application number: PCT/JP2010/061504
(87) International publication number: WO 2011/007701

(57) **Abstract**

The delivery of the high-definition image signal corresponding to an area a user desires to view can be achieved without increasing the load of processing in a transmitting apparatus. There are included an image area dividing unit (20) for dividing the image area of an input image signal into a given number of areas to generate area division image signals; and a coding unit (30) for coding the area division image signals to generate image bit streams. There are also included an image bit stream group accumulating unit (40) for accumulating a plurality of image bit streams; and a view point information receiving unit (60) for receiving view point information including the information of a view position transmitted from a receiving apparatus (2). Then, it has been arranged that an image bit stream corresponding to a first area defined by a view position and an image bit stream corresponding to a second area that is a peripheral area of the first area be extracted from the image bit stream group accumulating unit (40), thereby generating transport image bit streams to be transmitted to the receiving apparatus (2).

## Description

### Technical Field

The present invention relates to a transmission device, a receiving device, a transmission method, a receiving method, and a transmission system, and in particular relates to technology for delivering video corresponding to an arbitrary viewing region, that has been designated at the receiving device side, from the transmission device to the receiving device, and technology for generating an image for display from the delivered video.

### Background Art

In recent years, making video high definition has advanced with the development of digitalization technology. Also, with the development of moving picture-encoding technologies such as MPEG (moving picture experts group)-2 or MPEG-4 and network communication technology, it has become possible to transmit these high-definition images to client terminals such as mobile telephones.

When transmitting high definition video to a client terminal via a network, it is necessary to generate a video encoded bit stream having a bit rate appropriate to the transmission band of the network. A bit stream means an information sequence having compressed information space (compressed signal space).

Generation of a video encoded bit stream can be carried out by reducing a high definition original video to a video size that is appropriate to the transmission band in non-compressed signal space, and carrying out video encoding on the reduced signal on a delivery server or the like.

On the other hand, it is also possible to form a video encoded bit stream that has been encoded at the same resolution quality as the original video without reducing the high definition original image in non-compressed signal space, and convert as required to a low-resolution video encoded bit stream according to the transmission band. Conversion to a low-resolution video encoded bit stream is carried out using transcoding, which is a video encoding conversion technology.

Converting to low resolution video using this type of transcoding technology and delivery of an entire video having a bit rate according to transmission band is disclosed, for example, in patent literature 1 and patent literature 2. In this case, at the client terminal it is possible to generate a video encoded bit stream corresponding to a specified region by carrying out video expansion processing using a low-resolution video encoded bit stream that has been received from the delivery server.

However, this video expansion means carrying out interpolation of a video signal, and results in expansion of only the size of a video displayed. In this way, since the resolution of a video displayed on the client terminal is lowered, there is a problem in that it is difficult for a user to discern detail of the video displayed in a viewing region.

In order to solve this type of problem, it is made possible to view a video of a viewing region that it is desired to view on a client terminal using the resolution quality of the original video as is. In this case, information designating a region a viewer wishes to view is first transmitted from the client terminal to the delivery server. Then, at the delivery server, video information corresponding to the viewing region is extracted from original high-definition video, which is a non-compressed signal, and after that a video encoded bit stream corresponding to the viewing region (hereafter referred to as viewing region video encoded bit stream) is generated by carrying out video encoding processing. At this time, quality of the video transmitted from the delivery server to the client terminal is kept high by keeping the resolution quality the same as the original video.

Generating a viewing region video encoded bit stream not from an original video signal, which is a non-compressed signal, but from a video encoded bit stream that has been generated in advance, is also practiced. In this case, it is necessary to have a procedure where a video encoded bit stream having the same resolution quality as the original high-definition video is generated in advance. The video encoded bit stream generated here does not correspond to a specified region, but corresponds to the overall region.

Then, at the time when information designating the viewing region (hereafter referred to as viewing region designation information) is transmitted from the client terminal, the video encoded bit stream is once decoded to non-compressed video signal, a video signal corresponding to the viewing region is extracted from the decoded video signal, and video encoding is carried out again. In this way, at the delivery server a high-resolution quality video encoded bit stream is generated that corresponds to the viewing region.

For example, in patent literature 3 there is disclosed a configuration in which not viewing region designation information but setting values, such as encoding parameters relating to a video it is desired to deliver, are transmitted from the client terminal. There is disclosed a method where, at a stage when setting values have been transmitted from the user, video that has been compressed using a predetermined MPEG-2 file format at a delivery side device is once decoded, and re-encoded using an MPEG-4 file format based on the setting values that have been designated.

### [Citation List]

### Patent Literature

Patent Literature 1: USP No. 5307167, specification
Patent Literature 2: publication of patent application No. Hei. 2-135880
Patent Literature 3: publication of patent application 2004-266690

### Summary of the Invention

### Technical Problem

However, in the case where a video signal corresponding to a region that has been designated as a viewing region is encoded at the resolution quality of a high definition video, if there are a large number of users who wish to view the video, then video encoding processing is necessary for every user request. Also, if viewing region designation information transmitted from a user is changed as time passes, it is necessary to carry out video encoding processing every time a change arises in the viewing region designation information. Specifically, processing load is increased within the delivery server. Further, since it is necessary to carry out video encoding processing for every user, processing load for video encoding processing in the delivery server also increases in proportion to the number of users.

Further, if the storage of delivered videos is taken into consideration, with a method in which video signals corresponding to a region that has been designated as a viewing region are extracted and encoded, it is necessary to store the original high-definition video as a non-compressed signal. This leads to the need for a large storage capacity in a storage device for storing original video signals. As a result, for a business or a provider carrying out delivery of videos, there is a problem in that the expenditure involved in construction and maintenance of a delivery server is increased.

On the other hand, with a method in which video is encoded in advance and a video encoded bit stream generated by the encoding is once decoded and then re-encoded, all videos that are delivered to the client device are re-encoded. This means that for a video encoded bit stream transmitted to the client terminal, there is a problem in that it is not possible to avoid quality degradation arising because of the re-encoding processing.

The present invention has been conceived in view of the above-described points, and has as its object to realize delivery of high-definition videos corresponding to a region a user wishes to view, without causing an increase in processing load on a transmission device, such as a server.

### Solution to the problem

In order to solve the above described problems, the present invention comprises a video region division processing section for dividing video regions of input video signals into a specified number of regions and generating a plurality of region divided video signals corresponding to each of the divided regions, and an encoding processing section for generating a plurality of video bit streams by encoding a plurality of region divided video signals. There also provided a video bit stream group storage section for storing a plurality of video bit streams that have been generated by the encoding processing section, and a viewpoint information receiving section for receiving viewpoint information, that is transmitted from a receiving device connected by a network to the transmission device, including information on viewing position that has been designated as a region desired to be viewed by a user of the receiving device from among video regions. With the above structure, a video bit stream corresponding to a first region specified using viewing position and a video bit stream corresponding to a second region, which is a peripheral region to the region specified using viewing position, are extracted from the video bit stream group storage section based on viewpoint information that has been received by the viewpoint information receiving section, and a video bit stream for transmission is generated, and this video bit stream is transmitted to the receiving device.

With this type of configuration, video of original input video signals is divided into a plurality of regions, video signals constituting the respective divided regions are encoded, a video bit stream is generated, and this video bit stream is stored in a transmission device. Then, a video bit stream corresponding to a region specified using viewing position is extracted based on viewpoint information that has been transmitted from the receiving device, and this video bit stream is transmitted to the receiving device.

In this way, at the transmission device side, information on viewing position is transmitted on a case-by-case basis from the receiving device, and there is no need to carry out encoding processing for video signals in accordance with viewing position.

Also, not only is a video bit stream for a region specified using viewing position (first region) transmitted to the receiving device, a video bit stream for a region peripheral to the first region (second region) is also transmitted.

As a result, even in the case when viewing position at the receiving device side moves, if the region moved to is only to the above-described peripheral region, it is not necessary to newly acquire a corresponding video bit stream from the transmission device.

### Advantageous Effects of the Invention

According to the present invention, it is possible to carry out delivery of a video bit stream in accordance with the position a user wishes to view in a form that has little delay, and while lightening processing load on a transmission device.

Also, with the present invention, even in the case where the viewing position is changed at the receiving device side, it is possible to swiftly generate a display video using a video bit stream corresponding to a second region that has already been transmitted from the transmission device.

### Brief description of the drawings

Fig. 1 is a schematic drawing showing an outline of a transmission system of a first embodiment of the present invention.
Fig. 2 is an explanatory drawing showing a structural example of a transmission region of the first embodiment of the present invention.
Fig. 3 is an explanatory diagram showing an example of encoding quality control in response to movement speed of viewing position in the first embodiment of the present invention.
Fig. 4 is a block diagram showing a structural example of a server of the first embodiment of the present invention.
Fig. 5 is an explanatory drawing for describing elements constituting multi-stream information and viewpoint information of the first embodiment of the present invention.
Fig. 6 is a block diagram showing an internal structural example of a client status management section in a server of the first embodiment of the present invention.
Fig. 7 is an explanatory drawing for describing an example of processing of an audio bit stream and mixer processing section in a server of the first embodiment of the present invention.
Fig. 8 is a block diagram showing an internal structural example of a single stream generating section in a server of the first embodiment of the present invention.
Fig. 9 is a block diagram showing an internal structural example of a single stream generating section in the server of the first embodiment of the present invention.
Fig. 10 is a block diagram showing an internal structural example of a single stream reconstruction processing control section in the server of the first embodiment of the present invention.
Fig. 11 is a block diagram showing an internal structural example of a client of the first embodiment of the present invention.
Fig. 12 is a flowchart showing an example of operation of a transmission system of the first embodiment of the present invention.
Fig. 13 is a schematic diagram showing a structural example of a server of a second embodiment of the present invention.

### Embodiments For Carrying Out The Invention

Embodiments of the present invention will be described in the following. Description will be given in the following order.
1. First Embodiment (example of delivering video signals supplied from an imaging device to a client).
2. Second Embodiment (example of delivering video signals supplied from a plurality of video delivery servers to a client).

### <1. First Embodiment>

The first embodiment (hereafter referred to as this example) will be described with a transmission device of the present invention applied to a server, and a receiving device of the present invention applied to a mobile telephone terminal. However, the receiving device of the present invention is not limited to a mobile telephone terminal and it can also apply to various devices having a communication function and a function to display videos on a display section, such as a PDA (Personal Digital Assistant), personal computer, music player or game terminal etc.

Description will be given in the following order.
(1) Transmission system Overview
(2) Structural example of server
(3) Structural example of client
(4) Transmission system operational example

### [Outline of Transmission System]

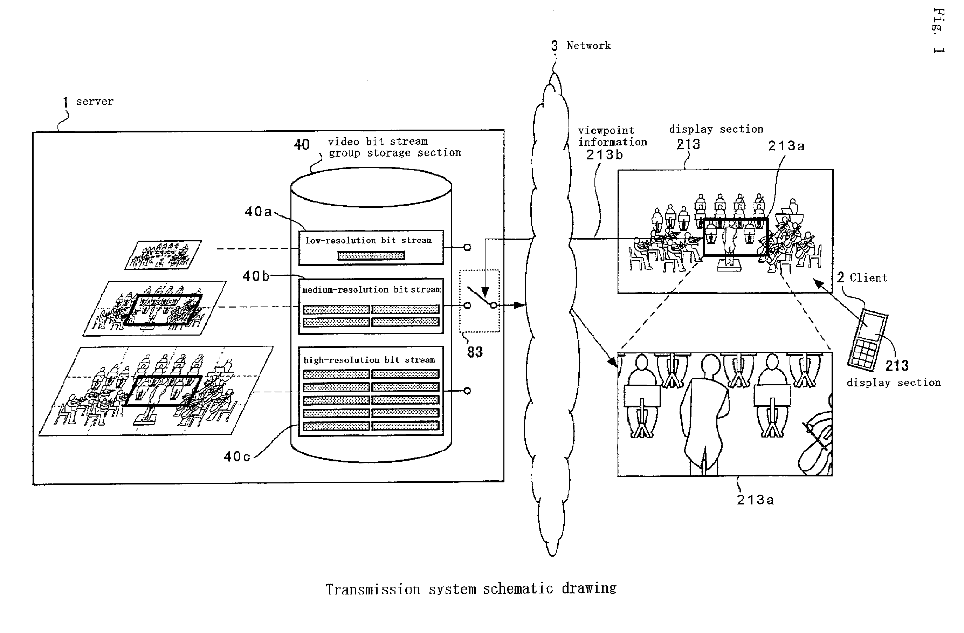

First, an overview of the transmission system of this example will be described with reference to Fig. 1 - Fig. 3. Fig. 1 shows an overview of a transmission system of this embodiment. The transmission system shown in Fig. 1 is made up of a server 1 for carrying out delivery of videos, and a client 2. The server 1 and the client 2 are connected via a network 3. In Fig. 1, only a single client 2 is shown, but in actual fact it is possible to have a configuration in which it is possible for a plurality of clients 2 to access the server 1 via the network 3.

A video signal input section constituted by an imaging device, not shown, is connected to the server 1, and high definition video that has been obtained by the video signal input section is input to the server 1. With this example, high-definition video is assumed to be video having a resolution of about 3,600 pixels x 2,400 pixels, for example. The resolution is not limited to this, and it is also possible to handle video signals having another resolution such as 7,680 pixels x 4320 pixels.

Operation for designating a specified region that it is desired to view (hereafter referred to as viewing desired region) is carried out at the client 2, within the high-definition original video on the server 1. Specifically, it is possible for a user to specify a viewing desired region by having a configuration wherein a small frame 213a is displayed on a screen of a display section 213 of the client 2, and the position and size of this frame 213a are varied.

Further, operation to expand or reduce this viewing desired region is also carried out. This is in order to make it possible for the user to view a video of a specified region within the screen at a higher resolution, or to see the entire image of the original high definition video at a lower resolution.

This type of information on size and position of a viewing desired region and on operation to expand or reduce the viewing desired region (specifically, information regarding resolution it is desired to view at; hereafter referred to as "requested resolution") is continuously transmitted from the client 2 to the server 1 as "viewpoint information". A parameter of the requested resolution can be set to a proportion (for example, 1, 2, 10 etc.) with respect to the resolution of the original high-definition video, which is taken as 1. Transmission of viewpoint information to the server 1 is carried out every time viewpoint information changes.

In order to realize this type of function, in the server 1 processing is first carried out to generate a video encoded bit stream (hereafter referred to simply as bit stream) from an original non-compressed high-definition video that has been supplied from the video signal input section.

This video encoded bit stream is generated in respective divided region units that are derived by dividing the video region of the original high-definition video into a plurality of regions. In the following description, a bit stream that has been generated for every divided region is referred to as a divided region video bit stream.

The server 1 generates this type of divided region video bit stream in advance, and stores in a video bit stream group storage section 40 that is constituted by a HDD (Hard Disk Drive) or the like. Then, at a time when viewpoint information has been transmitted from the client 2, a bit stream corresponding to the region specified by the viewpoint information is extracted and transmitted to the client 2.

In this way, even in the case where the various viewpoint information having different positions has been transmitted from a plurality of clients 2, all the server 1 has to do is simply extract a bit stream corresponding to the region specified by the viewpoint information and transmitting to the client 2.

Further, at the server 1 this divided region video bit stream is generated in correspondence with a plurality of resolutions. With this example, an example will be considered where respective divided region video bit streams are generated for each of 3 resolution levels, being "low-resolution", "medium resolution", and "high-resolution". Divided region video bit streams corresponding to each resolution that have been generated in this way are then stored in the video bit stream group storage section 40.

With this example the case has been considered where 3 resolution levels are provided, but this is not limiting. For example, it is also possible for the classification of resolution to be carried out in finer steps, for example to have 4 or 5 steps, or to be set in coarser steps, such as 2 steps.

A divided region video bit stream corresponding to "low-resolution" is stored in "low resolution bit stream" within the video bit stream group storage section 40 shown in Fig. 1. A low resolution that is about the same as that of the screen resolution of the display section 213 of the client 2 is set as the resolution for "low resolution". Specifically, for example, a low resolution such as QVGA (360 pixels x 240 pixels) is set. One low-resolution bit stream 40a is generated for one screen of the original high-definition video.

This low-resolution bit stream 40a is transmitted to the client 2, and by displaying on the screen of the display section 213 of the client 2 it becomes possible for the user of the client 2 to grasp the overall picture of the original high-definition video on the screen.

A divided region of video bit stream having the same resolution quality as the resolution quality of the original high-definition video is stored in a "high resolution bit stream group" 40c. This "high-resolution bit stream group" 40c is generated for the purpose of making it possible to deliver an image corresponding to a viewing desired region, that has been selected by a user, at the same high resolution quality as the original video.

A divided region video bit stream having a resolution of "medium resolution" is stored in a "medium-resolution bit stream group" 40b. As the resolution for "medium-resolution", a resolution that is between the above-mentioned resolution for "low resolution" and the resolution for "high-resolution" is set. Specifically, in a case where the resolution for "low-resolution" is 360 pixels x 240 pixels, and the resolution for "high-resolution" is 3600 pixels x 2499 pixels, a divided region video bit stream having a resolution of 1620 pixels x 1080 pixels is stored in the "medium-resolution bit stream group".

Any one of the bit stream (groups) stored as the "low-resolution bit stream" 40a, the "medium-resolution bit stream group" 40b, and the "high-resolution bit stream group" 40c is selected by selectively switching access points of a switching section 83, and transmitted to the client 2. Control of switching of the switching section 83 is carried out based on content of viewpoint information 213b that has been transmitted from the client 2. That is, a plurality of bit streams corresponding to regions specified by the viewpoint information 213b are extracted from the video bit stream group storage section 40, and transmitted to the client 2.

For example, a case where position information (position information for a viewing desired region) included in the viewpoint information 213b indicates an upper left side of the original video, and requested resolution is "10" (resolution quality = 1/10), is assumed. In this case, a low-resolution bit stream 40a is extracted, and transmitted to the client 2. That is, a low resolution bit stream 40a that has been generated by switching to a low resolution such that the entire original high-definition video fits the screen size of the display section 213 of the client 2 (for example, QVGA) is selected, and transmitted to the client 2.

On the other hand, when position information included in the viewpoint information indicates the upper left of the same high-definition original image, if requested resolution is "1", a plurality of bit streams corresponding to the viewing desired region are extracted from the high-resolution bit stream group 40c. Specifically, a bit stream for a 360 pixel x 240 pixel region corresponding to the resolution of the display section 213 of the client 2 is extracted, and transmitted to the client 2 as video corresponding to the viewing desired region.

Similarly, if the requested resolution is "5" (resolution quality =1/5), a plurality of bit streams corresponding to a 720 pixel x 480 pixel region from the upper left of the original image are extracted from within the medium-resolution bit stream group 40b, and transmitted to the client 2.

With this type of structure, even in a case where various values of requested resolution have been transmitted from the client 2 to the server 1, it is possible for the server 1 to rapidly extract a corresponding bit stream and transmit to the client 2.

Further, the server 1 of this example also transmits a bit stream constituting a peripheral region of the viewing desired region, and not only a bit stream corresponding to the viewing desired region set using the viewpoint information, to the client 2. This is so that even in a case where there is movement in the position of the viewing desired region (position where the user's viewpoint is; hereafter referred to as viewpoint position), a video which is in a region of a line of sight destination can be displayed on a display screen of the client 2.

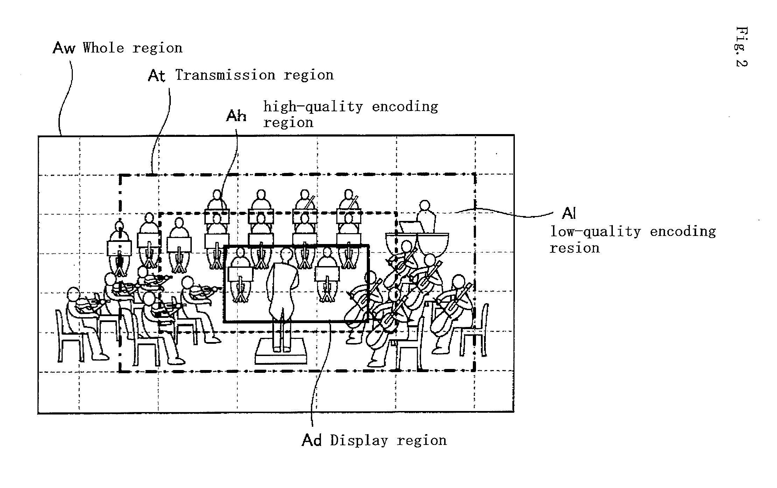

Fig. 2 shows an example of target regions for the server 1 extracting a bit stream. The outermost frame in Fig. 2 shows one screen of the original video (whole region Aw), while the smallest frame shown by the bold line shows a region Ad specified according to viewing desired region transmitted from the client 2. An image in this region Ad is displayed on a screen of the display section 213 of the client 2 after having been transmitted to the client 2, and so hereafter in this description this region Ad will be referred to as display region Ad (first region).

A region surrounded by the large frame shown by the dashed line, which is a peripheral region to the display region Ad, is a region constituted by a bit stream actually transmitted from the server 1 to the client 2. In the following description, this region will be referred to as a transmission region At (second region). Specifically, with the transmission system of this example, not only the bit stream constituting the display region Ad corresponding to the viewing desired region, but also a bit stream corresponding to a region that is peripheral to this region, are both transmitted to the client 2.

However, with the transmission system of this example, delivery using a fixed bit rate, or delivery in a case where there is no leeway in the network bandwidth, are assumed. Accordingly, it is assumed that bandwidth of the network would be occupied by delivering a bit stream corresponding not only to the display region Ad but also to a region peripheral to the display region Ad.

In order to solve this problem, at the server 1 a bit stream is generated by prioritizing according to quality of encoding between the display region Ad and region peripheral to the display region Ad, within the transmission region At. Specifically, the amount of data flowing on the network is reduced by assigning a bit stream of low quality (reduced encoding amount), compared to the bit stream constituting the display region Ad, to the region that is peripheral to the display region Ad.

With the example shown in Fig. 2, a high-quality (large encoding amount) bit stream is assigned to the region enclosed by the dotted line within the transmission region At (high quality encoding region Ah; 3rd region). On the other hand, a bit stream of lower quality than the bit stream assigned to the high quality encoding region Ah is assigned to a region outside the high quality encoding region Ah within the transmission region At (low quality encoding region Al; 4th region).

However, in cases such as where the viewpoint position is changed quickly by the user, in the event that the movement speed of the display region Ad is fast, the possibility of accessing the peripheral region is also increased. In this type of situation, quality of the bit stream assigned to the peripheral region is made slightly higher (medium quality) than for the case where the display region Ad is not moving. On the other hand, quality of the bit stream assigned to the display region Ad is made slightly lower than for the case where the display region Ad is not moving.

By automatically changing the priority assigned to a high-quality bit stream in accordance with movement speed of the viewpoint position (display region Ad) it is possible to assign more bandwidth to data that should be transmitted with priority, even when delivering at a fixed bit rate. On the other hand, even in a case where the movement speed of a line of sight position is fast, it is possible to rapidly generate a display video at the client side using a bit stream constituting a region outside the display region Ad that has already been transmitted as the transmission region At from the server 1.

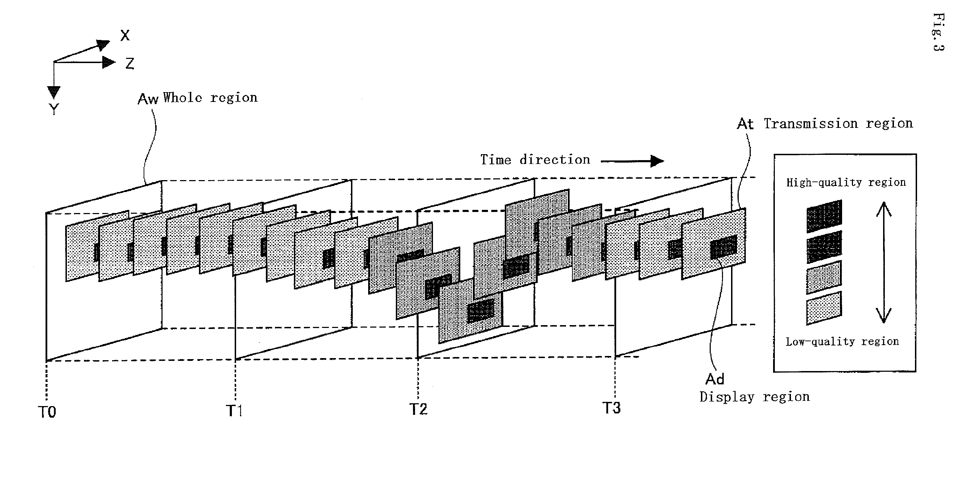

Fig. 3 is a drawing showing a correspondence example for movement speed of a viewpoint position (display region Ad) that changes with time, and encoding amount for each region constituting the transmission region At. In Fig. 3, the X-axis and Y-axis correspond to X-axis and Y-axis of the whole region Aw of the original video, and the Z-axis shows the time direction. Also, level of quality assigned to each region is shown differentiated by different patterns. Locations in Fig. 3 that correspond to locations in Fig. 2 are shown by the same reference numerals.

From time T0 to time T1 in the time direction, there is no significant change in the position of the display region Ad. Specifically, it will be understood that the viewpoint position of the user has been kept at substantially the same position. In this type of situation, it is considered that the possibility of the viewpoint position moving to a peripheral region outside the display region Ad is low. Accordingly, a high-quality bit stream is assigned to a high quality encoding region Ah including the display region Ad corresponding to the viewpoint position, while a low quality bit stream is assigned to the other region in the transmission region At.

From time T1 to time T3, it is shown that there is significant change in the position of the display region Ad, and that the movement speed of the position is fast. In this type of situation, it is considered that the possibility of the viewpoint position moving to a peripheral region outside the display region Ad is high. Therefore, quality of the bit stream assigned to the display region Ad is lowered slightly from the quality (high quality) assigned during T0 - T1. Also, quality of the bit stream assigned to the transmission region At not including the display region Ad is raised slightly from the quality (low quality) assigned during T0 - T1. In the event that the viewpoint position moves at high-speed, a person's visual capability is lowered, and it is assumed they will also be less sensitive to degradation in video quality. Accordingly, even if quality of the bit stream assigned to the display region Ad is lowered, it is considered that the possibility of a user noticing degradation with that video quality is low.

### [Structural example of server]

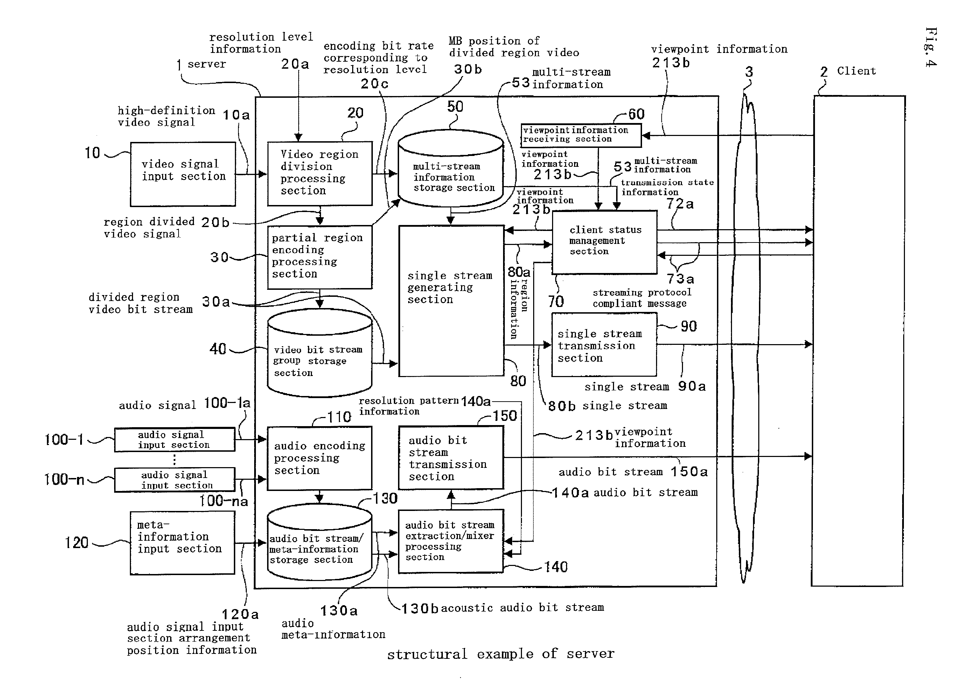

Next, description will be given of the structural example of a server 1, with reference to Fig. 4 to Fig. 10. Fig. 4 is a block diagram showing an internal structural example of a server 1. A video signal input section 10 is connected to the server 1. The server 1 also includes a video region division processing section 20, a partial region encoding processing section 30, a video bit stream group storage section 40, and a multi-stream information storage section 50.

The video signal input section 10 outputs a high definition video signal 10a, such as 3600 pixels x 2400 pixels, as described above, and is comprised of, for example, a broadcast camera, a surveillance camera or a camera that can be used in a teleconference etc. The video region division processing section 20 divides a video region formed by the video signal 10a that has been output from the video signal input section 10 into a plurality of regions. Division carried out here is carried out for respective levels of high-resolution, medium-resolution and low-resolution, in accordance with parameters (resolution level information 20a) indicating resolution levels input by a control section or the like, not shown. Then, a region divided video signal 20b, namely a high-resolution region divided video signal (first region divided video signal), medium-resolution region divided video signal (second (medium resolution) region divided video signal) and low-resolution region divided video signal (second (low resolution) region divided video signal), is generated.

The partial region encoding processing section 30 encodes video signals for each divided region of each resolution level generated by the video region division processing section 20, to generate a divided region video bit stream 30a. The encoding carried out here is carried out in a format that does not have a predictive relationship between each divided region, such as movement vectors, quantization coefficient, quantization parameter etc. As an encoding method it is possible to use MPEG-2, MPEG-4 SP, H. 263, H. 264 etc.

The video bit stream group storage section 40 stores a plurality of divided region video bit streams that have been generated by the partial region encoding processing section 30, categorized for every resolution level. Specifically, as shown in Fig. 1, each divided region video bit stream that has been generated by the partial region encoding processing section 30 is stored as a low-resolution bit stream 40a, a medium-resolution bit stream group 40b, and a high-resolution bit stream group 40c.

The multi-stream information storage section 50 manages information relating to encoding quality of each divided region video bit stream generated by the partial region encoding processing section 30, and position information showing what position within the whole region Aw each divided region belongs to. Specifically, encoding bit stream information 20c for each resolution level supplied from the video region division processing section 20, and position information 30b for each macro block (hereafter referred to as MB) constituting each divided region, supplied from the partial region encoding processing section 30, are stored as multi-stream information.

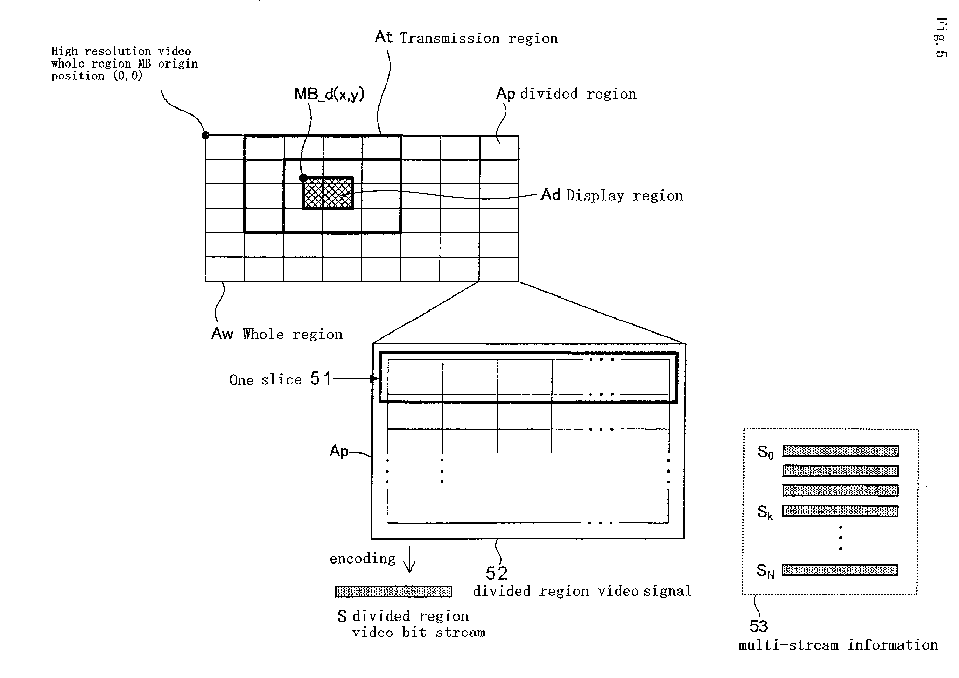

Here, details of the multi-stream information managed by the multi-stream information storage section 50 and viewpoint information transmitted from the client 2 will be described with reference to Fig. 5. This Fig. 5 shows an example of positioning, or a relationship, between a transmission region and a display region with respect to the whole region of the original high definition video, and below that shows a structural example of each divided regions, and still further below shows a structural example of a multi-stream. Fig. 5 shows a state where the whole region Aw is divided into, for example 48 individual divided regions Ap. Each divided region Ap contains, for example, X macroblocks in the horizontal direction and Y macroblocks in the vertical direction. The length of one line of a divided region Ap corresponds to the length of one slice portion 51 of an encoding unit.

By encoding a video signal 52 within each divided region Ap that is constructed in this way using the partial region encoding processing section 30 (refer to Fig. 4), a divided region video bit stream S is generated. In the multi-stream information storage section 50, information relating to a multi-stream comprising N (N is a natural number) divided region video bit streams S₀ - S_{N} is managed as multi-stream information 53.

The multi-stream information is made up of the following information.
- divided region video bit stream Sₖ (0≦k≦N)
- respective MB coordinates (x,y) included in divided region video bit stream Sₖ
- encoding bit rate.
Specifically, in the multi-stream information, position information for each divided region in the whole region Aw is indexed and managed for every MB.

Next, viewpoint information transmitted from the client 2 will be described with reference to Fig. 5. The following information is contained in the viewpoint information.
- resolution information for the display section 213 of the client 2
- requested resolution information
- MB position in the whole region Aw corresponding to the origin coordinates (x, y = 0, 0) of the display section 213

MB position in the whole region Aw corresponding to the origin coordinates of the display section 213 is managed as coordinate position (MB_d (x,y)).

Continuing the description by returning again to Fig. 4, the server 1 includes a viewpoint information receiving section 60, a client status management section 70, a single stream generating section 80, and a single stream transmission section 90.

The viewpoint information receiving section 60 receives viewpoint information 213b that has been transmitted from the client 2 via the network 3, and supplies information to the client status management section 70.

The client status management section 70 carries out management of viewpoint information 213b that has been received by the viewpoint information receiving section 60, and. transmission and reception of control data (streaming protocol compliance messages) to be exchanged with the client 2 at the time of streaming delivery of audio and video etc.

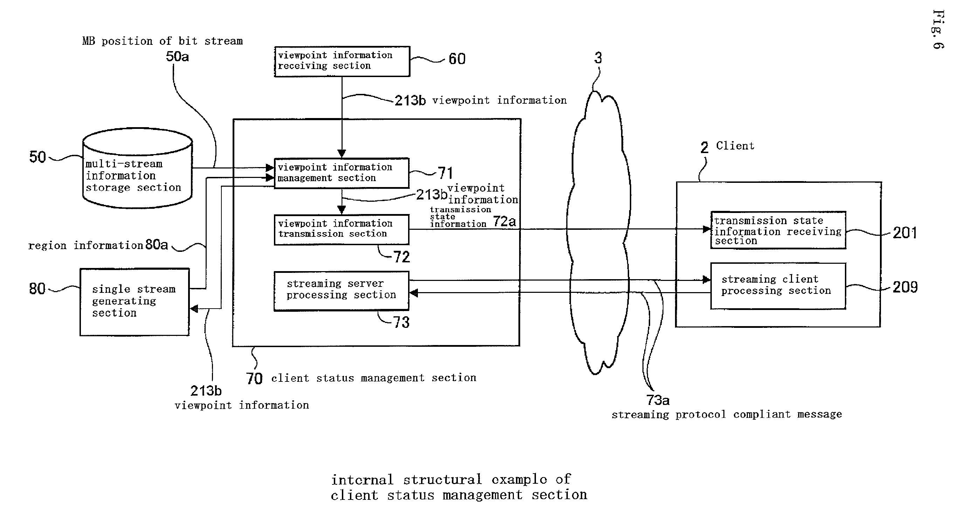

Fig. 6 shows an internal structural example of the client status management section 70. The client status management section 70 comprises a viewpoint region management section 71, a viewpoint information transmission section 72, and a streaming server processing section 73.

The viewpoint region management section 71 performs storage of viewpoint information 213b that has been received by the viewpoint information receiving section 60, and management of the viewpoint information transmission section 72. Specifically, viewpoint information 213b is output to the single stream generating section 80, "transmission state information" is generated based on viewpoint information 213b that is received by the viewpoint information receiving section 60 and MB position information for respective bit streams that have been read out from the multi-stream information storage section 50, and processing is carried out to transmit the generated transmission state information 72a to a transmission state information receiving section 208 of the client 2.

The transmission state information 72a is relative position information of the transmission region At with respect to the whole region Aw. Relative position information of the transmission region At with respect to the whole region Aw is generated based on "region information" 80a supplied from the single stream generating section 80 to the viewpoint region management section 71. Information indicating where within the whole region Aw the transmission region At exists is contained in an MB position map of the whole region Aw. Details of the "region information" will be described later.

The streaming server processing section 73 performs exchange of messages 73a that are compliant with streaming protocol with a streaming client processing section 203 of the client 2. As messages compliant with streaming protocol, for example, control messages requesting transmission, or pause or stop, of video signals, or messages for carrying out session continuation, are exchanged.

With this example, an example has been given of a structure where the viewpoint information transmission section 72 for transmitting transmission state information is provided, but it is also possible to adopt an arrangement where the viewpoint information transmission section 72 is not provided, and transmission state information is stored in the header section of a video bit stream packet and transmitted to the client 2.

Description will continue again returning to Fig. 4. The single stream generating section 80 reads out a plurality of bit streams constituting the display region Ad specified by the viewpoint information received by the viewpoint information receiving section 60, and a region peripheral to the display region Ad, from the video bit stream group storage section 40. The plurality of bit streams that have been read out are then reconstituted and output as a single stream 80b.

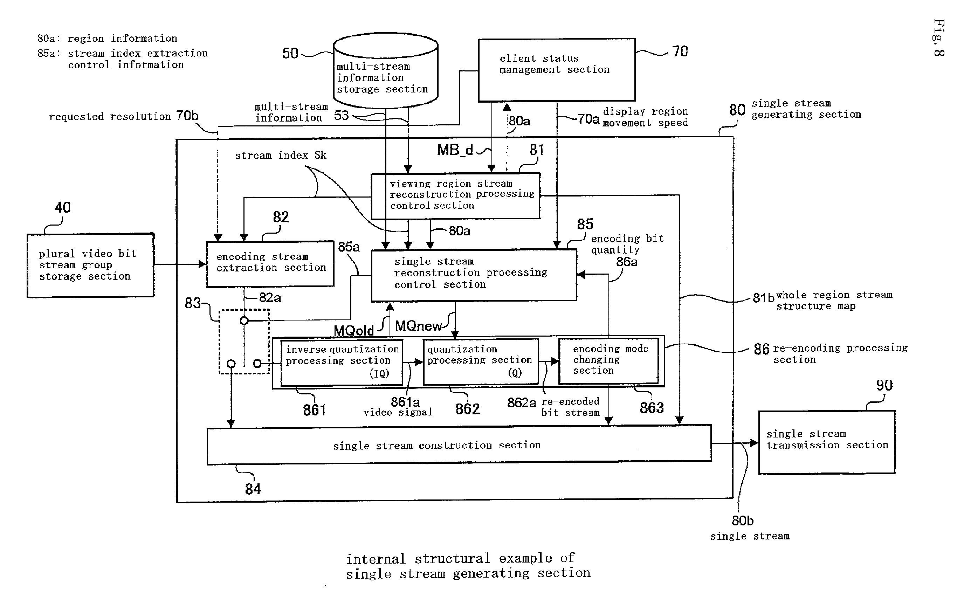

Also, among the plurality of bit streams made into the single bit stream, for bit streams constituting the low quality encoding region Al (Fig. 2), processing to re-encode with a reduced encoding amount is carried out. That is, the single stream generating section 80 also carries out determination as to whether the respective bit streams that have been made into the single bit stream are assigned to the high quality encoding region Ah or are assigned to the low quality encoding region Al. Detail of the single stream generating section 80 will be given later with reference to Fig. 8 to Fig. 10.

The single stream transmission section 90 packetizes the single bit stream that has been generated by the single stream generating section 80, and transmits the packetized single bit stream 90a to the client 2.

Further, audio signal input section 100-1 to audio signal input section 100-n (n is a natural number), and a meta-information input section 120, are connected to the server 1. The server 1 then includes an audio encoding processing section 110 for handling data input from these audio signal input sections, an audio bit stream/ meta-information storage section 130, and audio bit stream extraction/mixer processing section 140, and an audio bit stream transmission section 150.

The audio signal input sections 100-1 to 100-n are constituted by microphones, for example. Specifically, surrounding audio is picked up and converted to an audio signal, and obtained audio signals 100-1a to 100-na are output to the audio encoding processing section 110.

The audio encoding processing section 110 encodes a plurality of audio signals that have been output from the audio signal input sections 100-1 to 100-n using, for example, a PCM (pulse code modulation) encoding method, or an AAC (advanced audio coding) encoding method. Audio bit streams attained by encoding are then output to the audio bit stream/meta-information storage section 130.

The meta-information input section 120 outputs meta (attribute) information 120 relating to an audio signal, such as arrangement position information of the audio signal input units 100-1 to 100-n, for example, to the audio bit stream/meta-information storage section 130.

The audio bit stream/meta-information storage section 130 stores audio bit streams that have been output from the audio encoding processing section 110, and meta-information that has been output from the meta-information input section 120.

The audio bit stream extraction/mixer processing section 140 extracts an appropriate audio bit stream from the audio bit stream/meta-information storage section 130, based on resolution pattern information 140a or viewpoint information 213b obtained from the audio bit stream/meta-information storage section 130. Processing to mix a plurality of extracted audio bit streams is also carried out based on the meta-information. An audio bit stream 140a that has been extracted from the audio bit stream extraction/mixer processing section 140 is supplied to an audio bit stream transmission section 150, and the audio bit stream transmission section 150 transmits the audio bit stream 150a to the client 2.

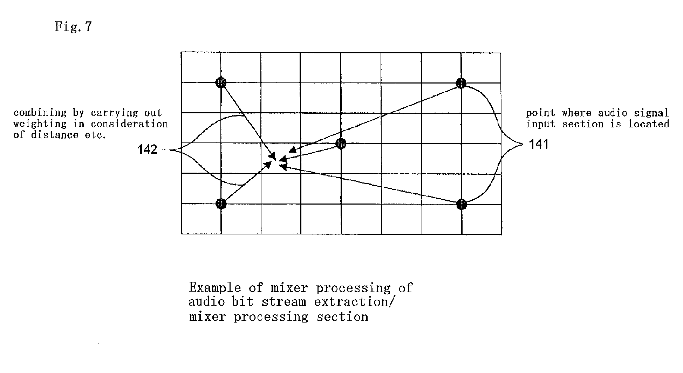

Fig. 7 is an explanatory drawing showing an example of processing by the audio bit stream extraction/mixer processing section 140. In Fig. 7, a point at which an audio signal input unit 100 is arranged is shown by a black dot. The audio bit stream extraction/mixer processing section 140 carries out weighting taken into consideration distance between arrangement point, and mixes together each of the audio signals that have been weighted (refer to arrows 142).

By carrying out this type of processing, since it is possible to output video of a viewing desired region that has been specified by the user, and also output audio for that region loudly, a high sense of realism is imparted to a user who is viewing the streaming.

Next, an internal structural example of the single stream generating section 80 will be described with reference to Fig. 8. The single stream generating section 80 comprises a viewing region stream determination processing section 81, an encoded stream extraction section 82, a switching section 83, a single stream construction section 84, a re-encoding processing section 86, and a single stream reconstruction processing control section 85.

The viewing region stream determination processing section 81 determines which MB position bit stream of the whole region Aw should be extracted as a bit stream corresponding to the transmission region At, and outputs this bit stream as a stream index Sₖ to the encoded stream extraction section 82 and the single stream reconstruction processing control section 85.

Determination of a bit stream corresponding to the display region Ad is carried out based on MB position MB_d of the display region Ad transmitted from the client status management section 70, and the multi-stream information 53 from the multi-stream information storage section 50.

Also, the viewing region stream determination processing section 81 carries out determination as to which bit stream, of the bit streams that have been extracted as bit streams corresponding to the transmission region At, is assigned to the high quality encoding region Ah or the low quality encoding region Al. Then, MB positions of the transmission region At, the high quality encoding region Ah and low quality encoding region Al in whole region Aw are transmitted to the client status management section 70 and the single stream reconstruction processing control section 85 as "region information" 81a.

Further, the viewing region stream determination processing section 81 generates an "entire stream structure map" 81b showing arrangement position information for each bit stream on a screen for the whole region Aw, based on MB position MB_d of the display region Ad and the multi-stream information 53, and supplies the map to the single stream construction section 84.

The encoded stream extraction section 82 extracts an appropriate bit stream from the video bit stream group storage section 40 based on a stream index Sₖ transmitted from the viewing region stream determination processing section 81, and requested resolution information 70b supplied from the client status management section 70. A plurality of extracted bit streams 82a are then output to the switching section 83.

The switching section 83 switches an output destination for each bit stream that has been output from the encoded stream extraction section 82 to either the single stream construction section 84 or an inverse quantization processing section 861. Switching control is carried out based on stream extraction control information 85a supplied from the single stream reconstruction processing control section 85.

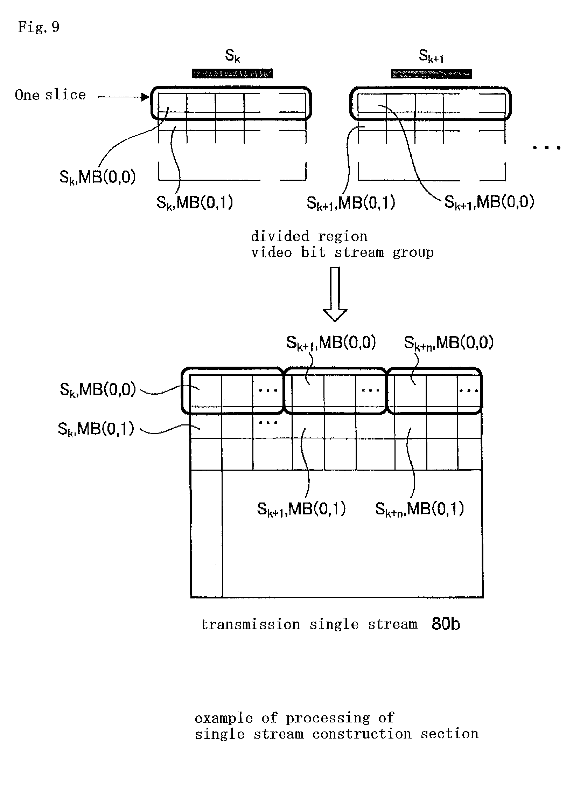

The single stream construction section 84 generates a single stream 80b for transmission by joining the plurality of extracted bit streams in the encoded stream extraction section 82. Fig. 9 shows an example of processing in the single stream construction section 84.

With the example shown in Fig. 9, the single stream construction section 84 first acquires a bit stream of one line portion that starts at MB (0,0) from the divided region video bit streamₛₖ. Next, a bit stream for one line portion that starts at MB (0,0) is acquired from the divided region video bit streamₛₖ₊₁ contained in a region corresponding to the right side of the divided region video bit streamₛₖ. The left end of the bit stream for one line portion that was acquired from the divided region video bit streamₛₖ₊₁ is then connected to the right end of the bit stream for one line portion that was acquired from the divided region video bit streamₛₖ.

This processing continues until the right end in the horizontal direction of the transmission region At is reached, and after the right end has been reached the same processing is carried out moved one line portion down. By repeating this type of processing, a single bit stream 80b for transmission is constructed from the plurality of divided region video bit streams S.

Returning once more to Fig. 8, the single stream reconstruction processing control section 85 determines quantization step at the time of re-quantization processing carried out by the re-encoding processing section 86. This determination is carried out based on the multi-stream information 53 supplied from multi-stream information storage section 50, the stream index Sₖ supplied from the viewing region stream determination processing section 81, and movement speed information 70a of the display region Ad supplied from the client status management section 70.

The re-encoding processing section 86 carries out re-encoding processing on a bit stream for which re-encoding has been instructed by the single stream reconstruction processing control section 85. The inverse quantization processing section 861, a quantization processing section 862, and an encoding mode changing section 863 are included in the re-encoding processing section 86.

The inverse quantization processing section 861 decodes (inverse quantizes) a bit stream that has been extracted by the encoded stream extraction section 82, at the time of re-encoding processing. At this time, an encoding parameter MQold that was possessed by the bit stream before decoding is extracted, and the extracted encoding parameter MQold is supplied to the single stream reconstruction processing control section 85.

The quantization processing section 862 re-quantizes a video signal 861a that has been decoded by the inverse quantization processing section 861, using a re-quantization coefficient MQnew for re-encoding supplied from the single stream reconstruction processing control section 85.

The encoding mode changing section 863 carries out changing of an encoding mode for the re-encoding bit stream 862a after quantization, in accordance with changed content arising as a result of the re-quantization processing in the quantization processing section 862. For example, in the case where an encoding coefficient possessed by a bit stream before re-encoding is lost, as a result of carrying out courses quantization in the quantization processing section 862, processing is carried out to change a macroblock type for the re-encoding bit stream after quantization to a "skipped macroblock". A re-encoded bit stream for which change of encoding mode has been carried out is then supplied to the single stream construction section 84. Also, the encoding mode changing section 863 supplies the encoding bit quantity 86a to the single stream reconstruction processing control section 85.

With the example shown in Fig. 8, there is only mention of re-quantization processing carried out by the re-encoding processing section 86, but processing is not limited to this. For example, depending on the type of macroblock, processing to carry out re-encoding after having performed decoding up to pixel level is also carried out.

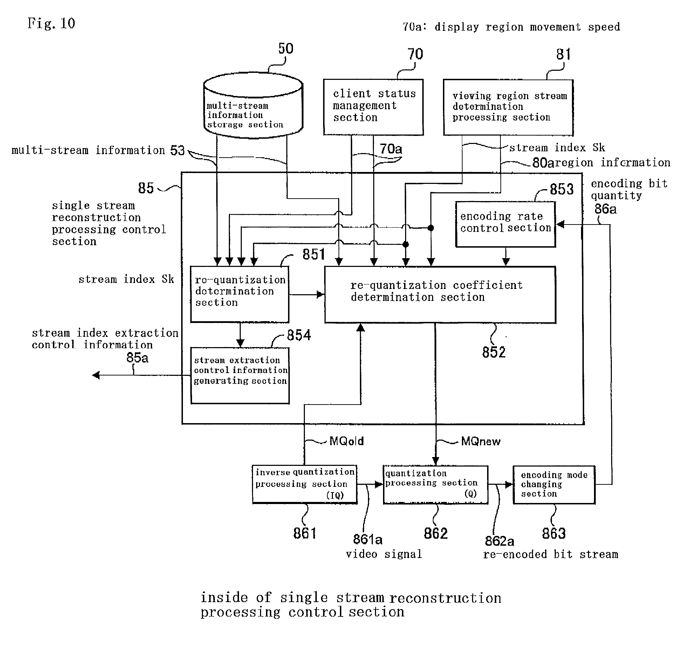

Fig. 10 shows details of the single stream reconstruction processing control section 85. The single stream reconstruction processing control section 85 includes a re-quantization determination section 851, a re-quantization coefficient determination section 852, an encoding rate control section 853, and a stream extraction control information generating section 854.

The re-quantization determination section 851 carries out determination as to whether or not it is necessary to re-encode each bit stream extracted by the encoded stream extraction section 82 (refer to Fig. 8), and outputs the determination result to the re-quantization coefficient determination section 852 and the stream extraction control information generating section 854.

Specifically, in a case where movement speed of the display region Ad is smaller than a previously set threshold value, and an extracted bit stream belongs to the high quality encoding region Ah, a result of determination to the effect that re-encoding is not required is output to the stream extraction control information generating section 854. On the other hand, in a case where movement speed of the display region Ad is greater than a previously set threshold value, or where the movement speed of the display region Ad is less than the previously set threshold value and the extracted bit stream belongs to the low quality encoding region Al, a result of determination to the effect that re-encoding is required is output to the re-quantization coefficient determination section 852 and the stream extraction control information generating section 854.

Determination as to in which region, within the transmission region At, the extracted bit stream belongs is carried out based on the multi-stream information 53 transmitted from the multi-stream information storage section 50, and region information 80a transmitted from the viewing region stream determination processing section 81. Magnitude of movement speed of the display region Ad is determined based on display region movement speed information 70a transmitted from the client status management section 70.

The re-quantization coefficient determination section 852 determines a re-quantization coefficient MQnew used in re-quantization based on multi-stream information 53a that has been extracted from the multi-stream information storage section 50, display region movement speed information 70a that has been supplied from the client status management section 70, and stream index Sₖ and region information 80a supplied from the viewing region stream determination processing section 81.

The encoding rate control section 853 determines an encoding rate for the MB that is the subject of the next encoding, based on information of encoding bit quantity 86a output from the encoding mode changing section 863. The determined encoding rate is then supplied to the re-quantization coefficient determination section 852.

The stream extraction control information generating section 854 generates stream extraction control information for controlling access points of the switching section 83, based on a determination result transmitted from the re-quantization determination section 851, and supplies the generated stream extraction control information 85a to the switching section 83. Specifically, in the case where a determination result of "re-quantization not required" is input from the re-quantization determination section 851, control information for switching the access points of the switching section 83 (refer to Fig. 8) to the single stream construction section 84 side is generated. In the case where a determination result of "re-quantization required" is input from the re-quantization determination section 851, control information for switching the access points of the switching section 83 (refer to Fig. 8) to the re-encoding processing section 86 side is generated.

### [Structural example of client]

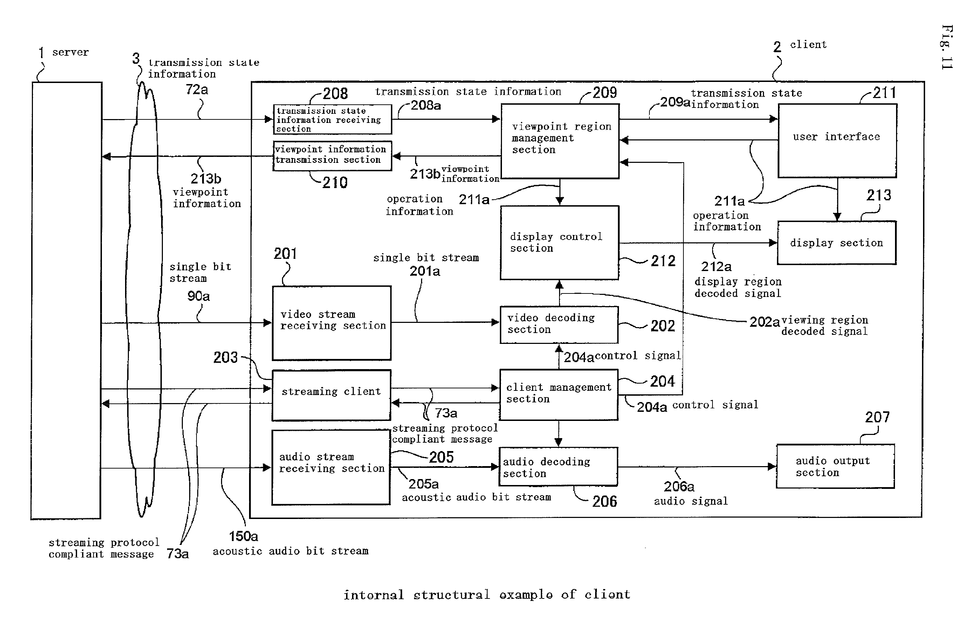

Next, an internal structural example of the client 2 will be described with reference to the block diagram of Fig. 11. The client 2 includes a video stream receiving section 201, a video decoding section 202, a streaming client processing section 203, a client management section 204, an audio stream receiving section 205, an audio decoding section 206, and an audio output section 207.

The video stream receiving section 201 receives a single stream 90a that has been transmitted from the server 1, and transmits a received single stream 201a to the video decoding section 202. The single stream received by the video stream receiving section 201 is a single stream constituted by a plurality of bit streams forming the transmission region At.

The video decoding section 202 decodes the single stream 201a that has been supplied from the video stream receiving section 201, to generate a transmission region decoded signal 202a. The generated transmission region decoded signal is then supplied to a display control section 212.

The streaming client processing section 203 performs exchange of messages 73a that are compliant with streaming protocol with the server 1. The client management section 204 manages status relating to streaming, and carries out control of the video decoding section 202 and the audio decoding section 206 regarding timing of starting streaming regeneration. Also, the messages 73a that are compliant with streaming protocol to the streaming client processing section 203.

The audio stream receiving section 205 receives the audio bit stream 150a that has been transmitted from the server 1, and supplies the received audio bit stream 205a to the audio decoding section 206. The audio decoding section 206 decodes the audio bit stream that has been supplied from the audio stream receiving section 205, and supplies the decoded audio bit stream 206a to the audio output section 207. The audio output section 207 is provided with a speaker or the like to output the audio bit stream that has been supplied from the audio decoding section 206 as audio, using.

The client 2 also comprises a transmission state information receiving section 208, viewpoint region management section 209, viewpoint information transmission section 210, user interface section 211 as an operation input section, the display control section 212, and the display section 213.

The transmission state information receiving section 208 receives transmission state information 72a that has been transmitted from the server 1, namely relative position information of the transmission region At with respect to the display region Ad, and outputs to the viewpoint region management section 209. The viewpoint region management section 209 generates viewpoint information 213b based on transmission state information 208a that has been received by the transmission state information receiving section 208, operation information 211a input by the user from the user interface section 211, and control signals 204a supplied from the client management section 204. The generated viewpoint information is then output to the viewpoint information transmission section 210.

The viewpoint information transmission section 210 transmits the viewpoint information 213b that has been output from the viewpoint region management section 209 to the server 1. The user interface section 211 is made up of up and down, and left and right keys, and various buttons, and carries out control to change the position and size of a frame (refer to Fig. 1) for viewing desired region selection displayed on the display section 213.

With this example, appearance of displaying a frame on the screen in order to select a viewing desired region has been given as an example, but this is not limiting. For example, it is possible to construct the user interface section 211 from a touch panel and acceleration sensor, and to determine viewing desired region based on an operation of the user touching or inclining the screen etc.

The user interface section 211 also supplies content of an operation that has been input by the user as operation information to the viewpoint region management section 209, the display control section 212, and the display section 213. Further, information showing where, in the whole region Aw, corresponds to the screen position a user is currently viewing is generated based on transmission state information 209a supplied from the viewpoint region management section 209, and this information is also subjected to processing for display on the screen of the display section 213.

The display control section 212 extracts a signal for a display region Ad portion actually displayed on the display section 213, from among transmission region decoded signals that have been transmitted from the video decoding section 202, to generate a display region decoded signal 212a. The generated display region decoded signal 212a is then supplied to the display section 213.

The display section 213 is constituted by an LCD (Liquid Crystal Display) or organic EL (Electro Luminescence) panel or the like, and displays the display region decoded signals that have been supplied from the display control section 212 as an image on the display screen.

### [Operational Example Using Transmission System]

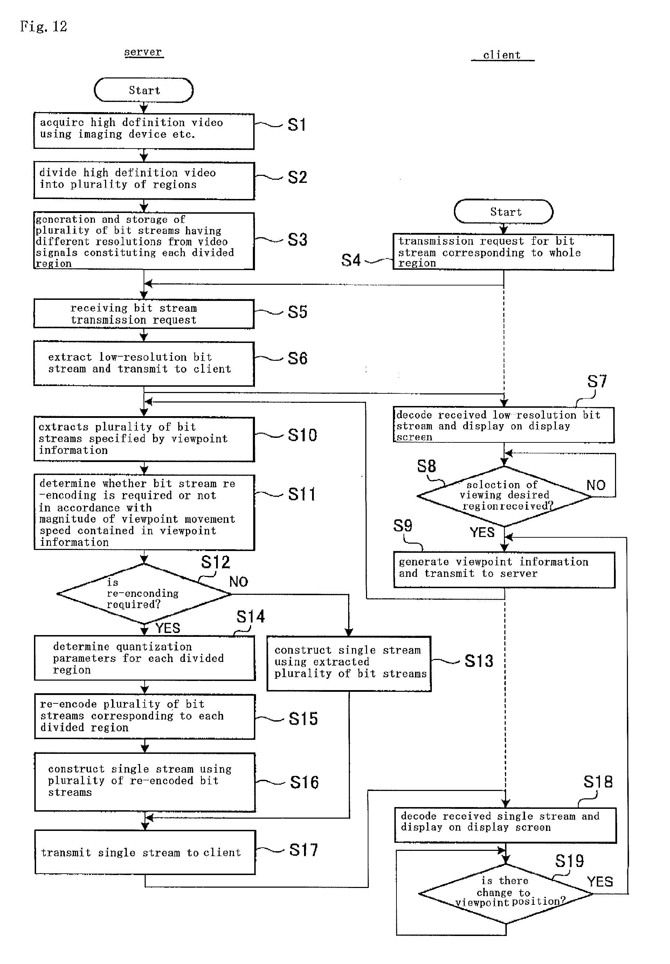

Next, an example of processing by the server 1 and client 2 of the transmission system of this example will be described with reference to the flowchart of Fig. 12. First, the server 1 acquires a high definition video signal that has been output from the video signal input section 10 (Step S1). Next, the video region division processing section 20 divides the high definition video that was acquired in step S1 into a plurality of regions (step S2). The partial region encoding processing section 30 then generates a plurality of bit streams of different resolutions from video signals constituting each of the divided regions, and stores in the video bit stream group storage section 40 (step S3). With this example, a low-resolution stream, a medium-resolution stream group, and a high-resolution stream group are generated.

Next, the client 2 sends a transmission request to the server 1 so as to transmit the bit stream corresponding to the whole region Aw of the video (step S4). If the viewpoint information receiving section 60 of the server 1 receives a transmission request (step S5), the single stream generating section 80 extracts a low resolution bit stream from the video bit stream group storage section 40, and the single stream transmission section 90 transmits the extracted low-resolution bit stream to the client 2 (step S6).

At the client 2, the video stream receiving section 201 receives a low resolution bit stream, the video decoding section 202 decodes the low resolution bit stream, and the display region decoded signal that was obtained by the decoding is displayed as an image by the display control section 212 on the display section 213 display section 213 (step S7). Next, whether or not a viewing desired region has been selected by operation input to the user interface section 211 is determined (step S8), and in the event that no selection operation is received the determination of step S8 is repeated. If a selection operation has been received, the viewpoint region management section 209 generates viewpoint information, and the generated viewpoint information is transmitted to the server 1 by the viewpoint information transmission section 210 (Step S9).

If view point information is received by the viewpoint information receiving section 60 off the server 1, a plurality of bit streams specified by the viewpoint information are extracted from the video bit stream group storage section 40 by the encoded stream extraction section 82 of the single stream generating section 80 (step S10). Then, the single stream reconstruction processing control section 85 of the single stream generating section 80 determines whether or not re-encoding of bit streams corresponding to each divided region is required based on magnitude of viewpoint moving speed contained in the viewpoint information (step S11).

When it is determined that re-encoding is not necessary (step S12), the single stream construction section 84 of the single stream generating section 80 constructs a single bit stream using a plurality of bit streams that have been extracted from the video bit stream group storage section 40 (Step S13).

When it is determined that re-encoding is necessary (step S12), the single stream reconstruction processing control section 85 determines re-quantization parameters for each bit stream constituting the divided region (step S14). The re-encoding processing section 86 then re-encodes the plurality of bit streams using the re-quantization parameters (Step S15).

Further, the single stream reconstruction processing control section 85 reconstructs a single bit stream using the re-encoded bit streams (step S16). Then, the single bit stream that has been reconstructed by the single stream construction section 84 or the single stream reconstruction processing control section 85 is transmitted by the single stream transmission section 90 to the client 2 (step S17).

At the client 2, the single stream that was received by the video stream receiving section 201 is decoded by the video decoding section 202, and the display control section 212 displays the display region decoded signal that was obtained by the decoding as an image on the display section 213 (step S18). It is then determined whether or not there has been change to the user's viewpoint position (position of the viewing desired region) (step S19), and if there is changed to the viewpoint position step S9 is returned to and processing continues. If there is no change to the viewpoint position, the determination of step S19 continues. This determination continues until viewing by the user is terminated.

### [Advantageous Effects of the First embodiment]

According to the above-described first embodiment, in the server 1, since divided region video bit streams are generated and stored in advance, encoding processing for video signals does not need to be carried out whenever viewpoint information is transmitted from the client 2.

Also, at this time, since bit streams corresponding to each divided region are handled independently without having a predictive relationship, such as movement vectors between regions, quantization coefficients, or quantization parameters, it is not necessary to carry out processing such as movement vector detection and movement compensation, or coefficient conversion at the server 1.

In this way, even if the number of clients 2 that are connected to the server 1 increases, it becomes possible to keep increase in processing amount in the server 1 to a minimum.

Also, according to the above-described first embodiment, a plurality of types of divided region video bit streams are prepared in correspondence with different resolutions. In this way, even if the user repeatedly switches between a viewpoint for grasping the overall video and a viewpoint for confirming a detailed portion, it is possible to rapidly provide video at a resolution the user wants from the server 1 to the client 2.

Also, since divided region video bit streams having resolution quality of the same level as the resolution quality of the original high-definition video are generated, it is not necessary to carry out interpolation processing on the video at the client 2. Accordingly, it becomes possible for a user to view a high-definition video at the original high definition quality.

Also, according to the above-described first embodiment, not only a bit stream corresponding to a region set as the viewing desired region by the client 2, but also a bit stream constituting a region that is peripheral to this region, are both transmitted from the server 1 to the client 2. As a result, even if the viewing desired region (viewpoint position of the user) has moved, it is possible to decode the bit stream for the peripheral region that has been transmitted as the transmission region At, and display on the display section 213 of the client 2. That is, since the number of times communication is carried out between the server 1 and the client 2 is reduced, it is possible to avoid delays attributable to this communication arising.

Also, according to the above-described first embodiment, quality of a bit stream assigned to the display region Ad corresponding to the viewing desired region, and quality of the bit stream assigned to a region peripheral to the display region Ad, are dynamically controlled in accordance with magnitude of movement speed of the user's viewpoint position. In this way, it is possible to carry out delivery of videos making effective use of limited network bandwidth, without lowering the quality of a bit stream that should be transmitted at high quality. Also, even if the viewpoint position of the user moves significantly, it is possible to rapidly display a video corresponding to the viewing desired region on the display section 213 of the client 2.

Also, according to the above-described first embodiment, a plurality of divided region video bit streams are transmitted to the client 2 as a single stream. Accordingly, it is possible to acquire video of the region that has been designated as the viewing desired region at the client 2, by simply decoding the single stream that has been acquired by means of the network 3. Specifically, it is possible to reduce processing load on the client 2.

### [Modified example]

In the above-described first embodiment, it is also possible to carry out control to fluidly vary the size of the transmission region At in accordance with the magnitude of movement speed of the viewpoint position.

Also, in the above described first embodiment, it is also possible to have a configuration where a function is provided to follow a specified object within a video, and it is possible to automatically follow an object that has been specified by a user.

### <2. Second Embodiment>

Next, a second embodiment of the present invention will be described. With this embodiment, description is given of an example where a plurality of video bit streams delivered from a plurality of external video delivery server are displayed as videos on each of a plurality of divided regions that a display screen has been divided into, and it is possible for a user to select a video they wish to view from within this display.

### [Structural Example Of Server]

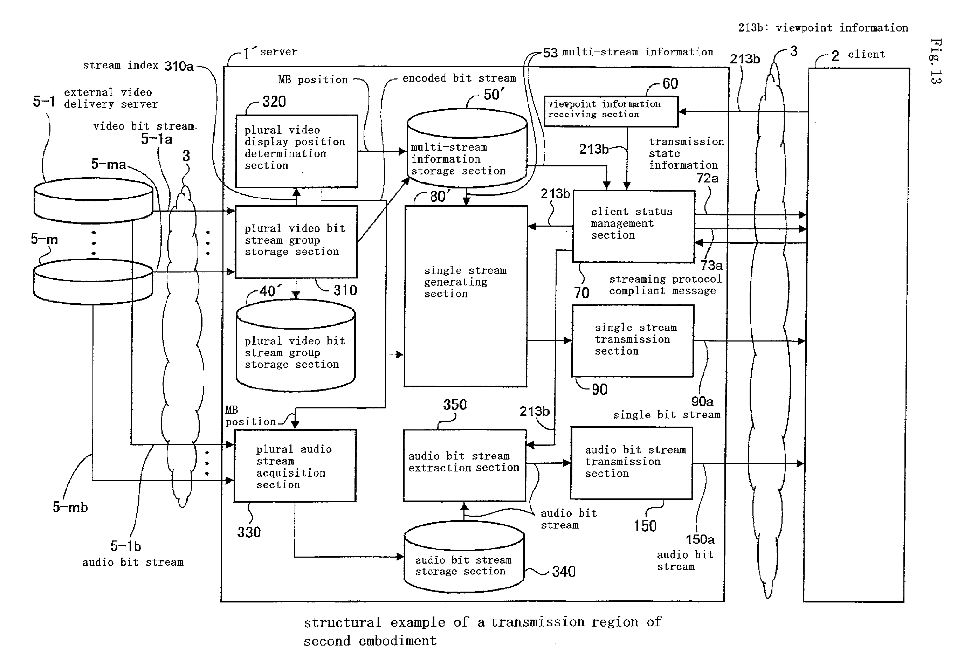

Fig. 13 is a block diagram showing an internal structural example of a server 1' constituting a transmission system of this example. The server 1' shown in Fig. 13 is connected to the client 2 via a network 3. Portions in Fig. 13 that correspond to portions in Fig. 4 are shown by the same reference numerals, and detailed description will be omitted.

A plurality of external video delivery servers 5-1 to 5-m (m is a natural number) for carrying out video delivery are connected to the server 1'. The server 1' includes a plural video bit stream acquisition section 310, a plural video bit stream group storage section 40', a plural video display position determination section 320, a multi-stream information storage section 50, a viewpoint information receiving section 60, a client status management section 70, a single stream generating section 80, and a single stream transmission section 90.

The plural video bit stream acquisition section 310 receives a plurality of video bit streams 5-1a to 5-ma delivered from the plurality of external video delivery servers 5-1 to 5-m, and supplies each of the received video bit streams to the plural video bit stream group storage section 40'. The plural video bit stream group storage section 40' stores video bit streams that have been supplied from the plural video bit stream acquisition section 310. Also, the plural video bit stream acquisition section 310 outputs a stream index 310a to the plural video display position determination section 320.

The plural video display position determination section 320 determines at what position, within a whole video Aw' generated by arranging a plurality of videos delivered from the external video delivery server 5-1 spatially side by side, each video bit stream that has been acquired by the plural video bit stream acquisition section 310 is arranged. The whole video Aw' referred to here has a size that changes fluidly in accordance with the number of video bit streams delivered from the external video delivery server 5-1, and in the case where the are a lot of video bit streams, the size of the whole video Aw' becomes incredibly enormous. Position information within the whole region Aw' and encoding bit rate, for each MB constituting each video bit stream, are then output to the multi-stream information storage section 50 and a plural audio bit stream acquisition section 330, which will be described later.

A multi-stream information storage section 50' manages MB position information for the whole region Aw' of each video bit stream supplied from the plural video display position determination section 320, as multi-stream information 53. The multi-stream information is then transmitted to the single stream generating section 80' and the client status management section 70.

The viewpoint information receiving section 60 and the client status management section 70 carry out the same processing as the processing for the first embodiment.

The single stream generating section 80' extracts a video bit stream constituting an image specified by the viewpoint information from the plural video bit stream group storage section 40', based on the viewpoint information 213b supplied from the client status management section 70. A single stream is then constructed from the plurality of video bit streams that have been extracted, and the generated single stream is supplied to the single stream transmission section 90. The single stream transmission section 90 transmits the single stream 90a, that has been supplied from the single stream generating section 80', to the client 2.

The server 1' includes a plural audio bit stream acquisition section 330, an audio bit stream storage section 340, an audio bit stream extraction section 350, and an audio bit stream transmission section 150.

The plural audio bit stream acquisition section 330 receives a plurality of audio bit streams 5-1b to 5-mb delivered from the plurality of external video delivery servers 5-1 to 5-m, and supplies each of the received audio bit streams to the audio bit stream storage section 340. The audio bit stream storage section 340 stores audio bit streams that have been supplied from the plural audio bit stream acquisition section 330.

The audio bit stream extraction section 350 extracts an audio bit stream corresponding to a video specified by viewpoint information from the audio bit stream storage section 340, based on the viewpoint information that is supplied from the client status management section 70. The extracted audio bit stream is transmitted to the audio bit stream transmission section 150. An audio bit stream 150a that has been transmitted from the audio bit stream extraction section 350 is transmitted by the audio bit stream transmission section 150 to the client 2.

### [Advantageous Effects Of The Second Embodiment]

According to the above-described second embodiment, videos using various bit streams transmitted from a plurality of video delivery servers 5 are displayed side-by-side on a screen of the display section 213 of the client 2. A specified video that has been designated by the user of the client 2 from among these videos is then extracted by the server 1 and transmitted to the client 2. In this way, it is possible for a user to easily select and view desired video from among all programs or video content delivered using numerous channels, for example.

In this case also, similarly to the first embodiment, since bit streams delivered from a plurality of video delivery servers 5 are reconstructed into a single stream and transmitted to the client 2, it is possible to lighten the processing load on the client 2.

### [Modified Example]

With this embodiment, an example has been given of a transmission system comprising a server 1' and a client 2, but this is not limiting. For example, it is also possible to have a configuration in which the function of the server 1' shown in Fig. 13 is imparted to the client 2. As a specific example, it is possible to configure the transmission system of this embodiment in a device such as a television receiver that receives programs delivered through a number of channels, and displays these programs.

### List Of Reference Numerals

1, 1' server
2 Client
3 Network
5 Video delivery server
10 Video signal input section
20 Video region division processing section
30 partial region encoding processing section
40 video bit stream group storage section
40' plurality of video bit stream group storage sections
50, 50' multi-stream information storage section
60 viewpoint information receiving section
70 client status management section
71 viewpoint region management section
72 viewpoint information transmission section
73 streaming server processing section
80, 80' single stream generating section
81 viewing region stream determination processing section
82 encoding stream extraction section
83 switching section
84 single stream construction section
85 single stream reconstruction processing control section
86 re-encoding processing section
90 single stream transmission section
100 audio signal input section
110 audio encoding processing section
120 meta-information input section
130 audio bit stream/meta-information storage section
140 audio bit stream extraction/mixer processing section
150 audio bit stream transmission section
201 video stream receiving section
202 video decoding section
203 streaming client processing section
204 client management section
205 audio stream receiving section
206 audio decoding section
207 audio output section
208 transmission state information receiving section
209 viewpoint region management section
210 viewpoint information transmission section
211 user interface section
212 display control section
213 display section
310 plural video bit stream acquisition section
320 plural video display position determination section
330 plural audio bit stream acquisition section
340 audio bit stream storage section
350 audio bit stream extraction section
851 re-encoding determination section
852 re-quantization coefficient determination section
853 encoding rate control section
854 stream extraction control information generating section
861 inverse quantization processing section
862 quantization processing section
863 encoding mode changing section
Ad Display region
Ah high-quality encoding region
Ap divided region
At Transmission region
Aw Whole region

## Claims

1. A transmission device comprising:
a video region division processing section for dividing a video region of an input video signal into a specified number of regions, and generating a plurality of region divided video signals corresponding to each of the divided regions;
an encoding processing section for generating a plurality of video bit streams by encoding the plurality of region divided video signals;
a video bit stream group storage section for storing a plurality of video bit streams that have been generated by the encoding processing section;
a viewpoint information receiving section for receiving viewpoint information, that is transmitted from a receiving device connected by a network to the transmission device, including information on viewing position that has been designated as a region desired to be viewed by a user of the receiving device from among the video regions;
a transmission bit stream generating section, for extracting the video bit stream corresponding to a first region specified by the viewpoint position, and the video bit stream corresponding to a second region which is a peripheral region to the first region, from the video bit stream group storage section, based on the viewpoint information that has been received by the viewpoint information receiving section, and generating a transmission video bit stream; and
a video bit stream transmission section for transmitting the transmission video bit stream that was generated by the transmission bit stream generating section to the receiving device.

2. The transmission device of claim 1, wherein
the viewpoint information contains information on the movement speed of the viewpoint position, and the transmission bit stream generating section comprises
a re-encoding processing section for performing inverse quantization on the video bit stream and re-encoding at a lower quantization level; and
a transmission bit stream reconstruction processing section for outputting either the video bit stream corresponding to the first region or the video bit stream corresponding to the second region to the re-encoding processes section, depending on the magnitude of movement speed of the viewpoint position.

3. The transmission device of claim 2, wherein the transmission bit stream reconstruction processing section, when the movement speed of the viewpoint position is less than or equal to a previously set specified threshold value, and the video bit stream that is subject to processing corresponds to the first region, or corresponds to a fourth region, that is a peripheral region to the first region and is a region other than a third region having a narrower range than the second region, outputs the video bit stream corresponding to the fourth region to the re-encoding processing section, and, when the movement speed of the viewpoint position exceeds the previously set specified threshold value, outputs video bit streams corresponding to the first to fourth regions to the re-encoding processing section.

4. The transmission device of claim 3, wherein
the video region division processing section generates a first region divided video signal having substantially the same resolution as the resolution of an input video signal, and a second region divided video signal that has been converted to a lower resolution than the video for the video region of the input video signal, in correspondence with each divided region into which the video region for the input video signal has been divided,
a first video bit stream generated from the first video region divided video signal, and a second video bit stream generated from the second video region divided video signal, are stored in the video bit stream group storage section,
the viewpoint information contains requested resolution information showing the size of a viewing region the user has requested, and
the transmission bit stream generating section extracts a video bit stream having a resolution corresponding to the resolution specified by the requested resolution information from the video bit stream group storage section.

5. The transmission device of claim 4, wherein the second region divided video signal contains a low-resolution region divided video signal that has been converted to a low resolution without dividing the video of the video region of the input video signal, and a medium-resolution region divided video signals that has been converted to a resolution that is higher than the resolution of the low resolution region divided video signal after dividing the video of the video region of the input video signal.

6. The transmission device of claim 5, wherein the transmission bit stream generating section generates a single stream, which is one bit stream formed by sequentially joining a plurality of video bit streams that have been extracted by reading out from the video bit stream group storage section.

7. The transmission device of claim 1, wherein the encoding processing section independently encodes the plurality of region divided video signals using a method in which there is no predictive relationship between regions.

8. The transmission device of claim 7, further comprising:
an audio encoding processing section for generating an audio bit stream by encoding an input audio signal;
an audio bit stream storage section for storing audio bit streams that have been generated by the audio encoding processing section in correspondence with information on position where the input audio signal was generated;
an audio bit stream extraction/combining processing section for extracting a plurality of audio bit streams, that have been generated from audio signals generated at the position corresponding to a video region specified by the viewpoint information, from the audio bit stream storage section, and combining the plurality of extracted audio bit streams; and
an audio bit stream transmission section for transmitting the audio bit stream that was combined by the audio bit stream extraction/ combining processing section to the receiving device.

9. A transmission device, comprising:
a video bit stream acquisition section for acquiring a plurality of video bit streams transmitted from a plurality of video delivery servers;
a plural video bit stream storage section for storing a plurality of video bit streams that have been acquired by the video bit stream acquisition section;
a display position determination section for determining at what position, within an overall region generated by arranging a plurality of videos using the plurality of video bit streams spatially side-by-side, each of the plurality of video bit streams that have been acquired by the video bit stream acquisition section is arranged;
a viewpoint information receiving section for receiving viewpoint information, that is transmitted from a receiving device, including information on viewing position that has been designated as a region desired to be viewed by a user of the receiving device from within the whole region in which videos using the plurality of video bit streams are displayed;
a transmission bit stream generating section, for extracting the video bit stream constituting the display region corresponding to a region specified by the viewpoint position that has been received by the viewpoint information receiving section from the video bit stream storage section, and generating a transmission video bit stream; and
a video bit stream transmission section for transmitting the transmission video bit stream that was generated by the transmission bit stream generating section to the receiving device.

10. A receiving device, comprising:
a video bit stream receiving section for receiving a video bit stream that has been transmitted from a transmission device connected by network;
a decoding processing section for decoding the video bit stream that has been received by the video bit stream receiving section to acquire a video signal;
an operation input section for receiving an operation for specifying a position it is desired to view from within a region included in an image using a video signal that has been acquired by the decoding processing section;
a display control section for, when a video bit stream corresponding to a viewing position that has been specified as a position it is desired to view, and a video bit stream corresponding to a peripheral region to the viewing position, are included within the video bit stream that has been received by the video bit stream receiving section, extracting a video signal for a portion corresponding to the viewing position from within the video signal that has been decoded by the decoding processing section, and displaying on the display section;
a viewpoint information generation section for generating viewpoint information including position information of the viewpoint position; and
a viewpoint information transmission section for transmitting the viewpoint information to the transmission device.

11. The receiving device of claim 10, further comprising a display section for displaying a video signal that has been decoded by the decoding processing section as an image.

12. A receiving method, comprising:
a step of receiving a video bit stream that has been transmitted from a transmission device connected by network;
a step of decoding the received video bit stream to acquire a video signal;
a step of receiving an operation for specifying a position it is desired to view from within a region having an image based on the video signal;
a step of generating viewpoint information including position information of a viewing position that has been specified as a position it is desired to view;
a step of transmitting the viewpoint information to the transmission device; and
a step of, when a signal corresponding to the viewing position, and a video bit stream corresponding to a peripheral region to the viewing position, are included within the video signal that has been decoded and acquired, extracting a video signal for a portion corresponding to the viewing position from within the video signal that has been decoded, and displaying on the display section.

13. A transmission method used with transmission device for transmitting data to a receiving device that is connected by a network, comprising:
a step of dividing a video region of an input video signal into a specified number of regions, and generating a plurality of region divided video signals corresponding to each of the divided regions;
a step of generating a plurality of video bit streams by encoding the plurality of region divided video signals;
a step of storing a plurality of video bit streams that have been generated by the encoding processing section;
a step of receiving viewpoint information, that is transmitted from the receiving device, including information on viewing position that has been designated as a region desired to be viewed by a user of the receiving device, from among the video regions;
a step of extracting the video bit stream corresponding to a first region specified by the viewpoint position, and the video bit stream corresponding to a second region which is a peripheral region to the first region, from the video bit stream group that has been stored, based on the viewpoint information, and generating a transmission bit stream; and
a step of transmitting the transmission bit stream to the receiving device.

14. A transmission system, comprising:
a transmission device that comprises,
a video region division processing section for dividing a video region of an input video signal into a specified number of regions, and generating a plurality of region divided video signals corresponding to each of the divided regions;
an encoding processing section for generating a plurality of video bit streams by encoding the plurality of region divided video signals;
a video bit stream group storage section for storing a plurality of video bit streams that have been generated by the encoding processing section;
a viewpoint information receiving section for receiving viewpoint information, that is transmitted from a receiving device connected by a network to the transmission device, including information on viewing position that has been designated as a region desired to be viewed by a user of the receiving device from among the video regions;
a transmission bit stream generating section, for extracting the video bit stream corresponding to a first region specified by the viewpoint position, and the video bit stream corresponding to a second region which is a peripheral region to the first region, from the video bit stream group storage section, based on the viewpoint information that has been received by the viewpoint information receiving section, and generating a transmission video bit stream; and
a transmission section for transmitting the transmission video bit stream that was generated by the transmission bit stream generating section to the receiving device; and
a receiving device that comprises,
a video bit stream receiving section for receiving a video bit stream that has been transmitted from the transmission device;
a decoding processing section for decoding the video bit stream that has been received by the video bit stream receiving section to acquire a video signal;
an operation input section for receiving an operation for specifying a position that it is desired to view from within a region included in an image based on a video signal that has been decoded by the decoding processing section;
a display control section for, when a video bit stream corresponding to a viewing position that has been specified as a position that it is desired to view, and a video bit stream corresponding to a peripheral region to the viewing position, are included within the video signal that has been decoded by the video decoding processing section, extracting a video signal for a portion corresponding to the viewing position from within the video signal that has been decoded by the decoding processing section, and displaying on the display section;
a viewpoint information generation section for generating viewpoint information including position information of the viewpoint position; and
a viewpoint information transmission section for transmitting the viewpoint information to the transmission device.

15. A receiving device, comprising:
a video bit stream acquisition section for acquiring a plurality of video bit streams delivered from a plurality of video delivery servers;
a plural video bit stream storage section for storing a plurality of video bit streams that have been acquired by the video bit stream acquisition section;
a display position determination section for determining in which, of divided regions on a display screen of the receiving device that is connected to the transmission device by a network, each of the plurality of video bit streams that have been acquired by the video bit stream acquisition section are displayed;
a viewpoint information generating section for generating viewpoint information that includes information on viewpoint position specified by user as a region it is designed to view, from among a plurality of divided regions in which video is displayed using the plurality of video bit streams;
a video bit stream extraction section, for extracting the video bit stream constituting the display region corresponding to a region specified by the viewpoint position from the video bit stream storage section;
a decoding processing section for decoding the extracted video bit stream to acquire a video signal;
a display section for displaying a video signal that has been decoded by the decoding processing section as an image;
an operation input section for receiving an operation for specifying a position that it is desired to view from within a region included in an image based on a video signal that has been decoded by the decoding processing section; and
a display control section for, when a video signal corresponding to a viewing position that has been specified as a position that it is desired to view, and a video signal corresponding to a peripheral region to the viewing position, are included within the video signal that has been acquired by decoding, extracting a video signal for a portion corresponding to the viewing position from within the video signal that has been decoded by the decoding processing section, and displaying on the display section.
